# EUROPÄISCHE PATENTSCHRIFT

(11) **EP 1 772 339 B1**
(45) Veröffentlichungstag und Bekanntmachung des Hinweises auf die Patenterteilung: **10.12.2008**
(21) Anmeldenummer: 06020461.7
(22) Anmeldetag: 28.09.2006
(51) Int. Cl.: B60W 50/08

(54) **Verfahren zur Entlastung des Fahrers eines Kraftfahrzeugs**
Procedure to relieve the driver of a motor vehicle
Procédure visant à réduire la charge du conducteur d'une automobile

(30) Priorität: 05.10.2005 DE 102005047591
(43) Veröffentlichungstag der Anmeldung: 11.04.2007
(73) Patentinhaber: Bayerische Motoren Werke Aktiengesellschaft, 80809 München (DE)
(72) Erfinder: Pelletier, Richard, Thousand Oaks CA 91361 (US); Hofmann, Marc, 80799 München (DE); Lindberg, Thomas, 81541 München (DE)

(56) Entgegenhaltungen:
- WO-A-03/058359
- DE-A1-8102004 009 30
- FR-A- 2 861 022
- GB-A- 2 273 580
- US-A1- 2005 076 308

## Beschreibung

Die vorliegende Erfindung betrifft ein Verfahren zur Entlastung des Fahrers bei der Bedienung eines Kraftfahrzeugs mit einer Vielzahl von Fahrerassistenzsystemen zur Durchführung einer Vielzahl unterschiedlicher Fahrmanöver sowie Mitteln zur Gewinnung von Situationsdaten zur Beschreibung der aktuellen Fahrsituation.

In modernen Kraftfahrzeugen ist zur Unterstützung des Fahrers eine Vielzahl von Fahrerassistenzsystemen vorgesehen. Beispielsweise wird der Fahrer durch solche Systeme dabei unterstützt, einem vorausfahrenden Kraftfahrzeug mit gleich bleibendem Abstand zu folgen. Ein anderes System unterstützt ihn dabei, ein vorausfahrendes Kraftfahrzeug zu überholen. In zukünftigen Kraftfahrzeugen wird die Anzahl solcher Fahrerassistenzsystemen voraussichtlich weiter zunehmen.

Grundsätzlich unterstützen die meisten Fahrerassistenzsysteme den Fahrer bei der Durchführung von Fahrmanövern (Folgemanöver, Überholmanöver, Einparkmanöver etc.). In vielen Fällen wird ein Fahrmanöver durch ein einziges Fahrerassistenzsystem unterstützt. Ebenso können mehrere Fahrerassistenzsysteme an der Durchführung eines einzigen Fahrmanövers beteiligt sein.

Es sind auch Fahrerassistenzsysteme bekannt, die geeignet sind, den Fahrer bei der Durchführung von Fahraufgaben zu unterstützen, welche aus einer Serie von einzelnen Fahrmanövern zusammengesetzt sind. Eine solche Serie kann sich gegebenenfalls situationsabhängig entwickeln. Beispielsweise besteht die Fahraufgabe "Stop and Go" typischerweise in einer situationsabhängigen Wiederholung der Fahrmanöver Anfahren, Folgen und Abbremsen. Der Einfachheit halber wird im Folgenden nur die Durchführung und/oder Auslösung von Fahrmanövern besprochen. Der Fall der Durchführung und/oder Auslösung von aus einer Serie von Fahrmanövern zusammengesetzten Fahraufgaben ist jedoch als gedanklich in diese Formulierung miteinbezogen zu betrachten.

Die Unterstützung des Fahrers durch ein Fahrerassistenzsystem kann je nach Automatisierungsgrad des Fahrerassistenzsystems von einem reinen Informationsangebot bis zu einer vollautomatischen Durchführung des jeweiligen Fahrmanövers reichen.

DE - 10 2004 009 308 A1, als nächstliegenden Stand der Technik betrachtet, zeigt ein Verfahren zur Entlastung des Fahrers bei der Bedienung eines Kraftfahrzeugs mit einer Vielzahl von Fahrerassistenzsystemen zur Durchführung einer Vielzahl unterschiedlichen Fahrmanöver sowie Mitteln zur Gewinnung von Situationsdaten zur Beschreibung der aktuellen Fahrsituation.

Dieses Dokument entspricht die Merkmale des Oberbegriffs des Anspruchs 1.

Aus dem Stand der Technik ist es bekannt, Kraftfahrzeuge mit Mitteln zur Gewinnung von Situationsdaten zur Beschreibung der aktuellen Fahrsituation auszustatten. Die erkannte Fahrsituation bzw. deren Charakteristika können beispielsweise bei der Unterstützung des Fahrers bei einem Fahrmanöver berücksichtigt werden. Die Unterstützung erfolgt also situationsabhängig und situationsangepasst. Manche Fahrerassistenzsysteme bedingen zwingend eine solche Situationserkennung (z. B. Erkennung eines vorausfahrenden Kraftfahrzeugs bei Folgemanöver). Andere Fahrerassistenzsysteme besitzen diese Eignung optional (z. B. Erkennung eines geschwindigkeitsbegrenzenden Verkehrsschilds bei Überholmanöver). Eine Interpretation verfügbarer Situationsdaten wird in der Regel durch jedes Fahrerassistenzsystem selbst geleistet. In der Regel findet die Situationsinterpretation daher nur bei aktiviertem Fahrerassistenzsystem statt und bezieht sich auf ein bereits in Ausführung befindliches Fahrmanöver.

Die Bedienung von Fahrerassistenzsystemen erfolgt gemäß dem Stand der Technik in der Regel über Bedieneinheiten, welche jeweils einem Fahrerassistenzsystem und/oder einem Fahrmanöver fest zugeordnet sind. Mehrfachbelegungen von Bedieneinheiten, menübasierte Bedienstrukturen und die Erkennung von Sprachkommandos stellen Ansätze dar, die Anzahl der zur Bedienung sämtlicher Fahrerassistenzsysteme bzw. Fahrmanöver vorgesehenen Bedienelemente zu reduzieren. Die Komplexität der Bedienung der tatsächlich vorgesehenen Bedienmöglichkeiten kann dadurch jedoch meist nur geringfügig verringert werden, nimmt manchmal sogar weiter zu. Die voraussichtlich zunehmende Anzahl von Fahrerassistenzsystemen und möglichen Fahrmanövern in zukünftigen Kraftfahrzeugen wird diese Komplexität weiter steigern. Neben einer subjektiven Überforderung des Fahrers kann diese Komplexität auch zu einer objektiven Überforderung des Fahrers führen. Beispielsweise kann der Fahrer ein Fahrmanöver aufgrund einer solchen objektiven Überforderung irrtümlich bzw. versehentlich auslösen.

Aufgabe der vorliegenden Erfindung ist es, ein einfaches Verfahren zur Entlastung des Fahrers bei der Bedienung eines Kraftfahrzeugs mit einer Vielzahl von Fahrerassistenzsystemen zur Durchführung einer Vielzahl unterschiedlicher Fahrmanöver zu schaffen.

Gelöst wird diese Aufgabe erfindungsgemäß durch ein Verfahren mit den Merkmalen des Anspruchs 1.

Weitere vorteilhafte Ausführungsformen und Weiterbildungen der Erfindung sind den abhängigen Ansprüchen zu entnehmen.

Der wesentliche Vorteil der Erfindung liegt darin, dass aus der Vielzahl grundsätzlich möglicher unterschiedlicher Fahrmanöver anhand der Situationsdaten diejenigen bestimmt werden, die in der aktuellen Fahrsituation tatsächlich situationsgerecht sind. Die bestehende Auswahlbasis wird dadurch wesentlich verringert. Eine Einigung zwischen Kraftfahrzeug und Fahrer zur Auswahl eines tatsächlich durchzuführenden Fahrmanövers kann aufgrund der beschränkten Auswahlbasis in wesentlich vereinfachter Art und Weise erfolgen. Die Interaktion zwischen Fahrer und Kraftfahrzeug wird somit erleichtert und der Fahrer entlastet.

Als situationsgerecht können dabei sämtliche in der aktuellen Fahrsituation prinzipiell und/oder entsprechend bestimmter Bedingungen (z. B. geringes Kollisionsrisiko) durchführbaren Fahrmanöver beurteilt werden. Als situationsgerecht können jedoch alternativ auch einige wenige in der aktuellen Fahrsituation favorisierte Fahrmanöver oder ein einziges favorisiertes Fahrmanöver angesehen werden

Die Beurteilung der Situationsgerechtheit eines Fahrmanövers kann durch ein an dem Fahrmanöver beteiligtes Fahrerassistenzsystem oder eine übergeordnete Informationsverarbeitungseinheit erfolgen. Die Beurteilung erfolgt abhängig von den verfügbaren Situationsdaten. Der Beurteilung kann ein Lernverfahren zugrunde liegen, welches geeignet ist, einen Zusammenhang zwischen Situationsdaten und einem Fahrmanöver auf Basis des Erfolgs vergangener Fahrmanöver und deren Situationsdaten zu erlernen. Die Beurteilung kann ebenso die Historie der zuletzt ausgewählten bzw. durchgeführten Fahrmanöver berücksichtigen.

Auf Basis der durch das Kraftfahrzeug bestimmten Menge situationsgerechter Fahrmanöver erfolgt anschließend eine Einigung zwischen Kraftfahrzeug und Fahrer, welches der zuvor bestimmten situationsgerechten Fahrmanöver einzuleiten ist. Vorzugsweise wird ein vom Fahrer ausgewähltes Fahrmanöver nur dann durch das Kraftfahrzeug eingeleitet, wenn es in der Menge situationsgerechter Fahrmanöver enthalten ist. Die Ausführung nicht situationsgerechter Fahrmanöver wird somit unterbunden. Ebenso kann es vorteilhaft sein, wenn alternativ oder zusätzlich ein Fahrmanöver nur dann überhaupt durch den Fahrer auswählbar ist, wenn es in der Menge situationsgerechter Fahrmanöver enthalten ist. Der bei der Einigung zwischen Kraftfahrzeug und Fahrer ablaufende Einigungsprozess kann je nach Ausführungsform der Erfindung prinzipiell gemäß zumindest drei verschiedener Varianten vonstatten gehen, die im folgenden beschrieben werden.

Gemäß einer ersten Variante der Erfindung besteht für den Fahrer eine stets gleich bleibende Auswahl an Bedienmöglichkeiten zum Auslösen von Fahrmanövern. Der Fahrer hat die Möglichkeit, durch ein Bedienkommando zumindest ein Fahrmanöver auszuwählen. Das Bedienkommando wird fahrzeugseitig detektiert. Jedoch wird das vom Fahrer durch das Bedienkommando ausgewählte Fahrmanöver nur dann durch das Kraftfahrzeug eingeleitet, wenn dieses in der Menge situationsgerechter Fahrmanöver enthalten ist. Andernfalls kann vom Kraftfahrzeug eine entsprechende Nachricht an den Bediener ausgegeben oder der Bediener in sonstiger Weise (z. B. Warnleuchte, Piepton, Vibration eines betätigten Bedienelements) über die Verweigerung der Ausführung seines Kommandos in Kenntnis gesetzt werden. Durch die Verweigerung der Durchführung nicht situationsgerechter Fahrmanöver kann in den meisten, insbesondere in sicherheitskritischen, Fällen ein irrtümliches bzw. versehentliches Auslösen eines Fahrmanövers verhindert werden. Denkbar ist auch, dass die Ausführung eines Kommandos nicht vollständig verweigert wird, sondern der Fahrer bei der Auswahl eines nicht situationsgerechten Kommandos lediglich hinsichtlich der mangelnden Situationsgerechtheit gewarnt wird und/oder die Durchführung des Fahrmanövers durch ein Bestätigungskommando des Fahrers auslösbar ist.

Gemäß einer zweiten Variante der Erfindung wird dem Fahrer eine variable Auswahl an Bedienmöglichkeiten zum Auslösen von Fahrmanövern angeboten. Beispielsweise können Bedienelemente entsprechend der aktuellen Fahrsituation mit situationsgerechten Fahrmanövern belegt werden. Dasselbe Bedienelement kann somit in unterschiedlichen Fahrsituationen zur Auslösung unterschiedlicher Fahrmanöver verwendet werden. Die Anzahl der Bedienelemente in einem Kraftfahrzeug kann somit erheblich verringert werden. Einem Bedienelement kann dabei eine Anzeigeeinheit zugeordnet sein, durch welche der aktuelle Belegungszustand des Bedienelements für den Fahrer erkennbar ist. Eine oder mehrere solche Anzeigeeinheiten können dem Fahrer gleichzeitig zur Information über sämtliche in der aktuellen Fahrsituation als situationsgerecht erachteten Fahrmanöver dienen. Alternativ oder zusätzlich kann eine separate Anzeigeeinheit, etwa ein LCD-Display im Instrumentenkombi oder ein Head-Up-Display, zur Information des Fahrers über sämtliche in der aktuellen Fahrsituation als situationsgerecht erachteten Fahrmanöver dienen.

Vorzugsweise bleibt die Initiative zum Auslösen eines Fahrmanövers gemäß der zweiten Variante der Erfindung dem Fahrer vorbehalten. Das Kraftfahrzeug grenzt lediglich die Vielfalt seiner Auswahlmöglichkeiten situationsabhängig ein. Durch verschiedene Weiterbildungen der zweiten Variante der Erfindung kann dem Kraftfahrzeug jedoch eine aktivere Rolle im Einigungsprozess übertragen werden.

Beispielsweise kann eine Veränderung der bestehenden Auswahlmöglichkeiten dem Fahrer angezeigt werden (z. B. Piepton signalisiert bei Aufhebung eines Überholverbots, dass Fahrmanöver Überholen nun situationsgerecht). Alternativ oder zusätzlich kann das an den Fahrer ausgegebene Informationsangebot, insbesondere eine einem Bedienelement zugeordnete Anzeigeeinheit, eine explizite oder implizite Priorisierung der auswählbaren Fahrmanöver ausdrücken. Eine Priorisierung kann beispielsweise dadurch ausgedrückt werden, dass das aktuell fahrzeugseitig favorisierte Fahrzeugmanöver stets durch dieselbe Bedienaktion auswählbar ist. Der Fahrer kann somit durch ebendiese Bedienaktion stets genau das Fahrmanöver auswählen (und somit auslösen), welches das Kraftfahrzeug aktuell favorisiert. Die in der Informationsverarbeitung des Kraftfahrzeugs hinterlegte Intelligenz kann somit voll ausgenutzt werden. Das Kraftfahrzeug plant das nächste auszuführende Fahrmanöver, der Fahrer hat jedoch stets die Initiative zum Auslösen desselben inne. Zudem muss der Fahrer sich für verschiedenste Fahrmanöver nur eine einzige Bedienaktion einprägen.

Gemäß einer dritten Variante der Erfindung wird ein in der aktuellen Fahrsituation als situationsgerecht erachtetes Fahrmanöver dem Fahrer aktiv durch das Kraftfahrzeug vorgeschlagen. Als situationsgerecht wird gemäß dieser dritten Variante der Erfindung also in der Regel nur ein einziges favorisiertes Fahrmanöver erachtet. Beispielsweise kann ein Überholmanöver durch das Kraftfahrzeug vorgeschlagen werden, wenn die gewonnenen Situationsdaten die Interpretation erlauben, dass ein vorausfahrendes Fahrzeug langsamer fährt, als es dem Wunsch des Fahrers entspricht, und ein Überholvorgang sicher durchführbar wäre. Die Durchführung des vorgeschlagenen Fahrmanövers wird dann bevorzugt durch ein Bestätigungskommando des Fahrers ausgelöst. Eine solche Einigung zwischen Kraftfahrzeug und Fahrer mittels Vorschlag und Bestätigung ist insbesondere mittels sprachbasierter Interaktionsverfahren einfach durchführbar.

Unter einem Vorschlag im Sinne der dritten Variante der Erfindung ist im Gegensatz zur zweiten Variante eine Informationsausgabe des Kraftfahrzeugs zu verstehen, welche eine Bestätigungshandlung des Fahrers herausfordert. Vorzugsweise ist ein solcher Vorschlag auf ein ganz bestimmtes Fahrmanöver gerichtet. Vorteilhafterweise wird der Vorschlag in einer Art und Weise ausgegeben, welche die Aufmerksamkeit des Fahrers zumindest kurzzeitig auf den Vorschlag lenkt. Die Initiative geht also im Gegensatz zur zweiten Variante der Erfindung vom Kraftfahrzeug aus.

Prinzipiell kann das Kraftfahrzeug bei einer Ausführungsform gemäß der dritten Variante der Erfindung auch mehrere situationsgerechte Fahrmanöver gleichzeitig vorschlagen. Ebenso kann parallel zu einem Vorschlag, über welchen noch keine Einigung erzielt wurde, ein weiterer Vorschlag ausgegeben werden. Dadurch kann der Fahrer beispielsweise zur Auswahl aus zwei Alternativen herausgefordert werden. Je nach Ausführungsform der Erfindung und abhängig vom Inhalt der Vorschläge kann dem Fahrer dann die Gelegenheit gegeben werden, eine Alternative auszuwählen bzw. sich für eine sequenzielle Ausführung mehrerer vorgeschlagener Fahrmanöver zu entscheiden.

Vorzugsweise sind für die Einigung zwischen Kraftfahrzeug und Fahrer unterschiedliche Interaktionsformen durch den Fahrer wählbar. Dem Fahrer kann beispielsweise durch eine Modusumschaltung die Gelegenheit gegeben werden, zwischen unterschiedlichen Interaktionsformen für den Einigungsprozess zu wählen. Die unterschiedlichen Interaktionsformen können im wesentlichen in unterschiedlichen Varianten der Erfindung gemäß der obigen Variantenbeschreibungen bestehen. Die Modusumschaltung kann beispielsweise durch ein gesondertes Bedienelement erfolgen.

Die oben genannte Modusumschaltung kann mit einer Modusumschaltung gekoppelt sein, die den Automatisierungsgrad der Fahrerassistenzsysteme zur Durchführung von Fahrmanövern betrifft. Alternativ kann eine den Automatisierungsgrad betreffende Modusumschaltung auch separat möglich sein.

Jede der drei zuvor beschriebenen Varianten der Erfindung kann durch das Vorsehen zumindest eines Bedienelements erweitert werden, welches dem Fahrer den Abbruch eines in Ausführung befindlichen Fahrmanövers und/oder die Ablehnung eines Vorschlags des Kraftfahrzeugs erlaubt.

Die vorliegende Erfindung ist prinzipiell auf beliebige Fahrmanöver anwendbar. Denkbar sind dabei insbesondere die Fahrmanöver der folgenden nicht abschließenden Liste:
- Fahrt mit gleich bleibender Geschwindigkeit
- Verfolgen eines vorausfahrenden Fahrzeugs mit gleich bleibendem Abstand
- Stop and Go (Fahraufgabe, siehe Einleitung)
- Überholen eines vorausfahrenden Fahrzeugs
- Spurwechsel inkl. Einfädeln / Ausfahren auf Schnellstraßen und Autobahnen
- Abbiegen
- Kehrtwende
- Einparken
- Anfahren

In der Regel werden solche Fahrmanöver sequenziell ausgeführt. Das Fahren des Kraftfahrzeugs setzt sich somit aus einer Kette einzelner Fahrmanöver zusammen. Viele Fahrmanöver erstrecken sich nur über einen sehr kurzen Zeitraum. Vorzugsweise kehrt das Fahrzeug nach der Durchführung eines solchen Fahrmanövers ohne die Erfordernis einer weiteren Einigung mit dem Fahrer zum zuvor ausgeführten Fahrmanöver zurück (z. B. Fahrt mit gleich bleibender Geschwindigkeit - Überholen eines vorausfahrenden Fahrzeugs - Fahrt mit gleich bleibender Geschwindigkeit).

Ebenso können notwendige, jedoch nicht sicherheitskritische, Übergänge zwischen Fahrmanövern (z. B. Übergang von Fahrt mit gleich bleibender Geschwindigkeit zu Folgen mit gleich bleibendem Abstand) ohne Einigung zwischen Fahrer und Kraftfahrzeug automatisch durch das Kraftfahrzeug vorgenommen werden.

Gleichartige Fahrmanöver, welche sich hinsichtlich wesentlicher Parameter unterscheiden (Fahrt mit Geschwindigkeit 100 km/h vs. Fahrt mit Geschwindigkeit 130 km/h), können im Sinne der Erfindung als unterschiedliche Fahrmanöver angesehen werden. Demnach kann beispielsweise ein Wechsel von einer Fahrt mit Geschwindigkeit 100 km/h zu einer beschleunigten Fahrt mit Geschwindigkeit 130 km/h einen Einigungsprozess zwischen Kraftfahrzeug und Fahrer erfordern. Der Einigungsprozess kann beispielsweise in einem Vorschlag des Kraftfahrzeugs "Beschleunigen auf 130 km/h ?" und einer darauf folgenden Bestätigung des Fahrers bestehen. Der Vorschlag des Kraftfahrzeugs kann dadurch ausgelöst werden, dass das Kraftfahrzeug nach der Erkennung eines Verkehrsschilds eine veränderte Fahrgeschwindigkeit für situationsgerecht erachtet. Alternativ oder zusätzlich kann dem Fahrer die Möglichkeit gegeben werden, ein in Ausführung befindliches Fahrmanöver zu parametrieren (beispielsweise Geschwindigkeitsveränderung durch Bedienelement während des Fahrmanövers Fahrt mit gleich bleibender Geschwindigkeit).

Durch die Erfindung wird eine gegenüber dem Stand der Technik vereinfachte Bedienung eines Kraftfahrzeugs, insbesondere der Fahrerassistenzsysteme desselben, ermöglicht. Der Fahrer ist nicht länger gezwungen, seine Aufmerksamkeit auf bestimmte Fahrerassistenzsysteme bzw. zugeordnete Bedienkommandos zu richten. Stattdessen wird er von dem Kraftfahrzeug auf der Abstraktionsebene unterstützt, auf welcher er seine Fahrt auch selbst gedanklich plant bzw. planen würde. Eine beim Fahrer gedanklich vorhandene Kette einzelner Fahrmanöver kann mittels der Erfindung nach und nach durch Einigungsprozesse vom Fahrer an das Kraftfahrzeug weitergegeben werden. Die Einigungsprozesse stellen sicher, dass lediglich objektiv (Beurteilung anhand Situationsdaten) situationsgerechte Fahrmanöver ausgeführt werden.

Die eigentliche Durchführung der Fahrmanöver kann auf Basis der aus dem Stand der Technik bekannten Verfahren für solche Fahrmanöver-Assistenten erfolgen. Die gerätetechnische Implementierung der Fahrmanöver-Assistenten kann auf Basis der aus dem Stand der Technik hierzu bekannten Vorrichtungen erfolgen.

Anhand der beigefügten Zeichnungen wird die Erfindung im Folgenden weiter erläutert. Dabei zeigen schematisch
- Fig. 1: eine Vorrichtung zur Durchführung eines erfindungsgemäßen Verfahrens in einem Kraftfahrzeug,
- Fig.2: ein Bedienelement zur Auswahl von Fahrmanövern geeignet zur Durchführung eines erfindungsgemäßen Verfahrens gemäß der ersten Variante der Erfindung und
- Fig. 3: ein Bedienelement zur Auswahl von Fahrmanövern geeignet zur Durchführung eines erfindungsgemäßen Verfahrens gemäß der zweiten Variante der Erfindung.

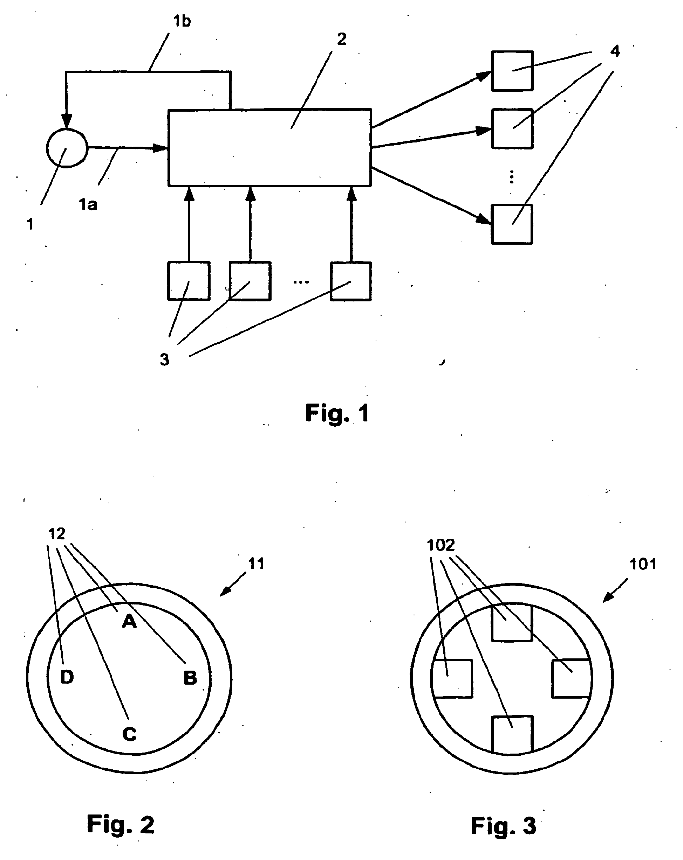

In Fig. 1 ist schematisch eine Vorrichtung zur Durchführung eines erfindungsgemäßen Verfahrens in einem Kraftfahrzeug dargestellt.

Ein Bedienelement 1 ist im Innenraum eines Kraftfahrzeugs verbaut. Es ist geeignet, je nach Bedienung unterschiedliche Signale 1a an die zentrale Informationsverarbeitungseinheit 2 des Kraftfahrzeugs auszugeben.

Die zentrale Informationsverarbeitungseinheit 2 ist mit Mitteln 3 zur Ermittlung von Situationsdaten zur Beschreibung der aktuellen Fahrsituation verbunden. Anhand dieser Situationsdaten klassifiziert die Informationsverarbeitungseinheit 2 laufend die aktuelle Fahrsituation. Jeder Fahrsituationsklasse sind gemäß einer in der Informationsverarbeitungseinheit 2 abgelegten Logik verschiedene Fahrmanöver zuordenbar, die für die jeweilige Fahrsituationsklasse situationsgerecht erscheinen.

Die zentrale Informationsverarbeitungseinheit 2 ist ferner mit verschiedenen Fahrerassistenzsystemen 4 verbunden. Die Fahrerassistenzsysteme 4 sind in unterschiedlichen Automatisierungsgraden ausgeführt. Sie dienen teils lediglich zur Ausgabe von Information an den Fahrer (Abstandsmessung, Navigation, Spurwechselwarnung), teils zur automatischen und/oder teilautomatischen Durchführung von Fahrmanövern. Die zentrale Informationsverarbeitungseinheit 2 ist geeignet, solche Fahrmanöver durch entsprechende Auslösesignale an die Fahrerassistenzsysteme 4 auszulösen.

Zunächst sei, ein Fahrmanöver X, z. B. "Fahren mit Geschwindigkeit 100 km/h", in Durchführung befindlich. Im vorderen Erfassungsbereich der Umgebungssensorik des Kraftfahrzeugs befinde sich ein langsameres Kraftfahrzeug. Zunächst bestehe auf dem befahrenen Streckenabschnitt ein durch Verkehrsschilder gekennzeichnetes Überholverbot. Die zentrale Informationsverarbeitungseinheit 2 habe diese Fahrsituation (langsameres Fahrzeug voraus, Überholverbot) anhand der verfügbaren Situationsdaten bereits erkannt. Der Fahrer habe lediglich das langsamere Fahrzeug erkannt und möchte dieses nun überholen.

Im Folgenden wird das skizzierte Beispielszenario anhand dreier Ausführungsbeispiele der Erfindung fortgeschrieben.

Das erste zu beschreibende Ausführungsbeispiel beschreibt eine Ausführungsform gemäß der ersten Variante der Erfindung.

Verwendung findet dabei ein Bedienelement 11 gemäß Fig. 2. Die Verschaltung des Bedienelements 11 im Kraftfahrzeug entspricht derjenigen des Bedienelements 1 aus Fig. 1, jedoch wird im vorliegenden ersten Ausführungsbeispiel noch kein Signal 1b von der Informationsverarbeitungseinheit 2 an das Bedienelement 11 ausgegeben.

Das Bedienelement 11 ist ausgeführt als Wipptaste mit vier Wipprichtungen oben, unten, links, rechts. Im Detail ist das Bedienelement 11 so ausgeführt, dass jeder der vier Wipprichtungen fest ein Signal 1a gemäß Fig. 1 zugeordnet ist, welches die Auswahl eines bestimmten Fahrmanövers an die zentrale Informationsverarbeitungseinheit 2 weitergibt. Der Einfachheit halber seien dies im vorliegenden Beispiel die Fahrmanöver A, B, C und D. Das Fahrmanöver A entspreche dabei dem bereits angesprochenen Überholmanöver.

Entsprechend der festen Zuordnung zwischen Wipprichtungen und Fahrmanövern ist das Bedienelement 11 dauerhaft beschriftet mit den Kennungen 12. Diese beschreiben jeweils eines der vier auswählbaren Fahrmanöver A, B, C und D.

Im oben beschriebenen Szenario erkennt der Fahrer nun das vor ihm fahrende langsamere Kraftfahrzeug und will dieses überholen. Er betätigt zum Einleiten eines automatischen Überholmanövers das Bedienelement 11 in Wipprichtung nach oben (Fahrmanöver A). Ein entsprechendes Signal 1a wird an die zentrale Informationsverarbeitungseinheit 2 weitergegeben. Diese hat jedoch das Überholverbot anhand der verfügbaren Situationsdaten erkannt und das Fahrmanöver A dementsprechend als nicht situationsgerecht eingestuft. Dementsprechend wird das Fahrmanöver A trotz der Auswahl durch den Fahrer zunächst nicht ausgeführt. An den Fahrer wird eine akustische Meldung "Manöver nicht ausführbar - Überholverbot!" ausgegeben.

Nach der Aufhebung des Überholverbots betätigt der Fahrer das Bedienelement 11 erneut in Wipprichtung nach oben (Fahrmanöver A). Nun stuft die zentrale Informationsverarbeitungseinheit 2 das Fahrmanöver A als situationsgerecht ein und löst dieses aus.

Alternativ zum beschriebenen Ausführungsbeispiel könnte bereits vor der eigentlichen Betätigung des Bedienelements eine Information über die Durchführbarkeit des jeweiligen Fahrmanövers an den Fahrer ausgegeben werden. Die Ausgabe der Information könnte beispielsweise durch ein leichtes Berühren des Bedienelements auslösbar sein.

Im obigen Ausführungsbeispiel wird ein Überholmanöver nur ausgeführt, wenn das Überholkommando des Bedieners umgehend ausführbar ist. Als Alternative hierzu könnte in dem Fall, dass ein nicht situationsgerechtes Fahrmanöver vom Fahrer ausgelöst wird, zunächst ein Wartezustand erreicht werden. In diesem Wartezustand speichert die zentrale Informationsverarbeitungseinheit 2 das Bedienkommando des Fahrers, führt das angeforderte Fahrmanöver jedoch zunächst nicht aus. Wenn die zentrale Informationsverarbeitungseinheit 2 zu einem späteren Zeitpunkt feststellt, dass das Fahrmanöver nun situationsgerecht ist, wird der Wartezustand durch Ausführung desselben beendet. Der Wartezustand kann aber auch ohne Ausführung des angeforderten Fahrmanövers beendet werden, wenn eine definierte Zeitspanne abgelaufen ist oder eine entsprechende Benutzereingabe erfolgt.

Das zweite zu beschreibende Ausführungsbeispiel beschreibt eine Ausführungsform gemäß der zweiten Variante der Erfindung.

Verwendung findet dabei ein Bedienelement 101 gemäß Fig. 3. Die Verschaltung des Bedienelements 101 im Kraftfahrzeug entspricht derjenigen des Bedienelements 1 aus Fig. 1. Im vorliegenden zweiten Ausführungsbeispiel wird auch ein Signal 1b von der Informationsverarbeitungseinheit 2 an das Bedienelement 101 ausgegeben. Dieses Signal 1b enthält die Kennungen (z. B. A, B, C, D) von derjenigen Fahrmanöver, welche die zentrale Informationsverarbeitungseinheit 2 in der aktuellen Fahrsituation für situationsgerecht erachtet. Ferner enthält das Signal 1b eine Priorisierung der Fahrmanöver, sodass stets ein seitens der Informationsverarbeitungseinheit 2 favorisiertes Fahrmanöver identifizierbar ist.

Das Bedienelement 101 ist ebenfalls ausgeführt als Wipptaste mit vier Wipprichtungen oben, unten, links, rechts. Die Belegung der Wipprichtungen des Bedienelements 101 mit Fahrmanövern ist jedoch variabel. Die Wipprichtungen werden mit den vier höchstpriorisierten situationsgerechten Fahrmanövern belegt, welche über das Signal 1b von der zentralen Informationsverarbeitungseinheit 2 empfangen werden. Bei einer Veränderung des Signals 1b wird die Belegung umgehend aktualisiert. Das höchstpriorisierte, d. h. favorisierte, Fahrmanöver wird dabei stets der Wipprichtung nach oben zugeordnet. Der Fahrer kann somit stets in gleicher Weise das von der Informationsverarbeitungseinheit 2 favorisierte Fahrmanöver wählen.

Entsprechend der variablen Zuordnung zwischen Wipprichtungen und Fahrmanövern ist das Bedienelement 101 nicht dauerhaft beschriftet, sondern enthält für jede Wipprichtung eine Anzeigeeinheit 102. Diese Anzeigeeinheit zeigt jeweils die aktuelle Belegung der Wipprichtung durch eine Kennung des jeweiligen Fahrmanövers an.

Auch in der Fortschreibung des obigen Beispielszenario anhand des vorliegenden zweiten Ausführungsbeispiels erkennt der Fahrer das vor ihm fahrende langsamere Kraftfahrzeug und will dieses überholen. Das Fahrmanöver A (Überholen) ist jedoch nicht situationsgerecht, dementsprechend fehlt eine entsprechende Beschriftung und Belegung der Anzeigeeinheiten 102. Während des Überholverbots werde angenommen, dass lediglich die Fahrmanöver B und C zur Auswahl stehen. Die obere und die rechte Wipprichtung des Bedienelements 101 sind entsprechend belegt. Entsprechende Kennungen sind in die obere und die rechte Anzeigeeinheit 102 eingetragen. Die Fahrmanöver B und C entsprechen jedoch nicht der Intention des Fahrers, welcher das vorausfahrende Fahrzeug überholen will. Er wartet daher zunächst ab.

Nach der Aufhebung des Überholverbots wird das Fahrmanöver A (Überholen) von der zentralen Informationsverarbeitungseinheit 2 als situationsgerecht eingestuft, sogar favorisiert. Die obere Wipprichtung des Bedienelements 101 wird daher mit dem Fahrmanöver A belegt. Die obere Anzeigeeinheit 102 zeigt die entsprechende Kennung. Der Fahrer erkennt anhand der oberen Anzeigeeinheit 102, dass das Fahrmanöver A nun auswählbar ist und wählt es aus. Die zentrale Informationsverarbeitungseinheit 2 empfängt ein entsprechendes Signal 1a und löst das Fahrmanöver A aus.

Bei der Durchführung des Manövers kann das Fahrzeug dem Fahrer sowohl rein informative Unterstützung, eine teilautomatisierte Regelung (siehe ACC) als auch eine Vollautomatik anbieten.

Das dritte zu beschreibende Ausführungsbeispiel beschreibt eine Ausführungsform gemäß der dritten Variante der Erfindung.

Verwendung finden dabei zwei als einfache Druckknöpfe ausgeführte und daher nicht eigens grafisch dargestellte Bedienelemente. Ein erster Druckknopf dient alleine zur positiven Bestätigung eines vorgeschlagenen Fahrmanövers durch den Fahrer, der zweite Druckknopf dient zur Ablehnung eines Vorschlags. Die Verschaltung der Druckknöpfe, insbesondere des ersten Druckknopfes, im Kraftfahrzeug entspricht derjenigen des Bedienelements 1 aus Fig. 1, jedoch wiederum ohne ein zurückwirkendes Signal 1b. Die zentrale Informationsverarbeitungseinheit 2 sei im vorliegenden dritten Ausführungsbeispiel zur optischen, akustischen, haptischen oder kinästhetischen Ausgabe von Vorschlägen an den Fahrer und zum Empfang von Sprach- und Druckknopf-Kommandos des Fahrers geeignet. Die Beurteilung der Situationsgerechtheit besteht im vorliegenden dritten Ausführungsbeispiel in der Identifikation maximal eines favorisierten Fahrmanövers für jede Fahrsituation. Veränderungen des favorisierten Fahrmanövers werden optisch, akustisch, haptisch oder kinästhetisch an den Fahrer ausgegeben, dieser kann diese durch eine Betätigung des ersten Druckknopfes oder ein bejahendes Sprachkommando bestätigen oder ablehnen.

In der Fortschreibung des obigen Beispielszenario anhand des vorliegenden dritten Ausführungsbeispiels nimmt der Fahrer eine weitgehend passive Rolle ein. Er kann (zumindest durch die hier beschriebenen Mittel) keine Fahrmanöver selbstständig auswählen. Er kann lediglich Vorschläge des Kraftfahrzeugs bezüglich durchzuführender Fahrmanöver abwarten und gegebenenfalls bestätigen oder ablehnen. Zur selbstständigen Auswahl von Fahrmanövern durch den Fahrer können jedoch gesonderte Bedienmöglichkeiten vorgesehen sein.

Während der Gültigkeit des Überholverbots favorisiert die zentrale Informationsverarbeitungseinheit 2 zunächst kein Fahrmanöver so sehr, als dass es dieses dem Fahrer vorschlagen würde. Nach der Aufhebung des Überholverbots wird das Fahrmanöver A (Überholen) von der zentralen Informationsverarbeitungseinheit 2 favorisiert. Ein akustischer Vorschlag "Vorausfahrendes Fahrzeug überholen?" wird an den Fahrer ausgegeben. Alternativ kann ein optischer Hinweis (z.B. Überholsymbol + Fragezeichen) eingeblendet werden. Der Fahrer bestätigt den Vorschlag durch eine Betätigung des ersten Druckknopfes. Die zentrale Informationsverarbeitungseinheit 2 empfängt ein entsprechendes Signal 1a. Die Einigung zwischen Fahrer und Kraftfahrzeug ist somit abgeschlossen und das Fahrmanöver A wird ausgelöst.

Teilweise in Ergänzung der obigen Ausführungen, teilweise im Folgenden erstmals genannt, kann die Erfindung den Fahrer in den folgenden weiteren Beispielszenarien unterstützen.

Gemäß einem weiteren Beispielszenario wird ein Verkehrsstau durch das Kraftfahrzeug erkannt und das Kraftfahrzeug schlägt dem Fahrer die Aktivierung eines vollautomatischen Stauassistenten vor. Im Kraftfahrzeug kann dazu beispielsweise akustisch die Frage ausgegeben werden: "Soll ich im Stau für Sie fahren?"

Wie an vielen Stellen des vorliegenden Dokuments ist im vorhergehenden Absatz die Formulierung gewählt, das Kraftfahrzeug erkenne etwas und das Kraftfahrzeug reagiere darauf. Selbstverständlich ist damit gemeint - und der Fachmann interpretiert dies beim Lesen ohnehin so - dass zumindest eine Einrichtung des Kraftfahrzeugs etwas erkennt und zumindest eine Einrichtung des Kraftfahrzeug darauf reagiert.

Gemäß einem weiteren Beispielszenario erkennt das Kraftfahrzeug eine Änderung einer Geschwindigkeitsbegrenzung und schlägt eine Änderung der aktuell eingestellten Wunschgeschwindigkeit vor, sofern bereits mit ACC (Adaptive Cruise Control) gefahren wird. Im Kraftfahrzeug kann dazu beispielsweise akustisch die Frage ausgegeben werden: "Wunschgeschwindigkeit erhöhen auf 80 km/h?"

Gemäß einem weiteren Beispielszenario erkennt das Kraftfahrzeug während des ACC-Betriebs eine Änderung einer befahrenen Straßenkategorie - etwa beim Übergang von einer Landstraße zu einer Autobahn - und schlägt eine Änderung der aktuell eingestellten Wunschgeschwindigkeit vor - beispielsweise von z.B. 60 km/h auf 130 km/h. Auch so kann der Bedienaufwand, der durch den Fahrer zu leisten ist, verringert werden.

Gemäß einem weiteren Beispielszenario schlägt das Kraftfahrzeug bei der Ankunft in der Nähe des Ziels einer Navigationsroute die Aktivierung eines automatischen Parkassistenten für die Suche nach einem Parkplatz vor. Im Kraftfahrzeug kann dazu beispielsweise akustisch die Frage ausgegeben werden: "Möchten Sie einen Parkplatz suchen?"

Gemäß einem weiteren Beispielszenario schlägt das Kraftfahrzeug bei Annäherung an eine Kreuzung mit roter Ampel ein Anhalten an der Ampel vor.

Gemäß einem weiteren Beispielszenario schlägt das Kraftfahrzeug bei nahender Baustelle die Aktivierung eines Engstellen-Assistenten vor, der das Fahrzeug in der verengten Fahrspur mittig zu führen vermag und den Fahrer somit entlasten kann.

Die in den vorhergehenden Absätzen geschilderten Beispielszenarien gehen jeweils von einer Initiative der fahrzeugseitigen Systeme aus. Der Fahrer muss jeweils nur seine Zustimmung zu dem unterbreiteten Vorschlag oder dessen Ablehnung kundtun.

In den beiden nachfolgenden Beispielszenarien geht die Initiative grundsätzlich vom Fahrer aus. Das Kraftfahrzeug setzt eine Bedienaktion des Fahrers aber jeweils nicht unmittelbar in ein Fahrmanöver um, sondern unterstützt den Fahrer dabei, den geeigneten Zeitpunkt für die Ausführung des Fahrmanövers zu finden.

Gemäß einem weiteren Beispielszenario drückt der Fahrer des Kraftfahrzeugs zunächst einen Spurwechselwunsch durch eine entsprechende Bedienaktion aus. Solange sich keine geeignete Lücke auf der benachbarten Fahrspur bietet, wird der Spurwechselwunsch seitens des Fahrzeugs nicht ausgeführt. Es kann aber beispielsweise eine Quittierung (z.B.: "Spurwechselwunsch erfasst - Suche nach geeigneter Lücke läuft") ausgegeben werden. Sobald das Fahrzeug eine geeignete Lücke entdeckt hat, kann das Fahrzeug
a) den Spurwechsel selbsttätig ausführen (sofern ein vollautomatisches Spurwechselmanöver durchführbar ist),
b) den Fahrer fragen, ob der Spurwechsel nun ausgeführt werden soll wäre und im Falle einer Bestätigung den Spurwechsel selbsttätig ausführen (sofern ein vollautomatisches Spurwechselmanöver durchführbar ist)
c) dem Fahrer mitteilen, dass der Spurwechsel nun ausgeführt werden kann (sofern kein vollautomatisches Spurwechselmanöver durchführbar ist). Im Kraftfahrzeug kann dazu beispielsweise akustisch die Mitteilung ausgegeben werden: ("Jetzt können Sie die Spur wechseln!")

Gemäß einem weiteren Beispielszenario drückt der Fahrer des Kraftfahrzeugs zunächst einen Überholwunsch durch eine entsprechende Bedienaktion aus. Sobald anschließend eine Überholmöglichkeit detektiert wird, wird der aktuelle Zeitpunkt als Überholzeitpunkt empfohlen. Im Kraftfahrzeug kann dazu beispielsweise akustisch die Mitteilung ausgegeben werden: "Jetzt können Sie überholen!"

## Patentansprüche

1. Verfahren zur Entlastung des Fahrers bei der Bedienung eines Kraftfahrzeugs mit einer Vielzahl von Fahrerassistenzsystemen zur Durchführung einer Vielzahl unterschiedlicher Fahrmanöver sowie Mitteln zur Gewinnung von Situationsdaten zur Beschreibung der aktuellen Fahrsituation, **gekennzeichnet durch** die Schritte:
- Gewinnung von Situationsdaten **durch** das Kraftfahrzeug
- anhand der Situations daten Bestimmung einer begrenzten Menge situationsgerechter Fahrmanöver **durch** das Kraftfahrzeug
- Einigung zwischen Kraftfahrzeug und Fahrer auf die Ausführung eines einzigen situationsgerechten Fahrmanövers.

2. Verfahren nach Anspruch 1, **dadurch gekennzeichnet,**
**dass** dem Fahrer eine variable Auswahl an Bedienmöglichkeiten zum Auslösen von Fahrmanövern angeboten wird,
wobei die Auswahl an Bedienmöglichkeiten so gestaltet ist, dass ein Fahrmanöver nur dann durch den Fahrer auswählbar ist, wenn es in der Menge situationsgerechter Fahrmanöver enthalten ist.

3. Verfahren nach Anspruch 1, **dadurch gekennzeichnet,**
**dass** ein Bedienkommando des Fahrers zur Auswahl eines Fahmranövers detektiert wird und
**dass** das vom Fahrer durch das Bedienkommando ausgewählte Fahrmanöver nur dann durch das Kraftfahrzeug eingeleitet wird, wenn es in der Menge situationsgerechter Fahrmanöver enthalten ist.

4. Verfahren nach einem der Ansprüche 1 bis 3, **dadurch gekennzeichnet,**
**dass** ein Bedienkommando des Fahrers zur Auswahl eines Fahrmanövers detektiert wird und dass der Fahrer bei der Auswahl eines nicht situationsgerechten Kommandos gewarnt wird.

5. Verfahren nach einem der Ansprüche 3 bis 4, **dadurch gekennzeichnet,**
**dass** dem Fahrer eine variable Auswahl an Bedienmöglichkeiten zum Auslösen von Fahrmanövern angeboten wird.

6. Verfahren nach einem der Ansprüche 1 bis 5, **dadurch gekennzeichnet,**
**dass** der Belegungszustand eines Bedienelements dem Fahrer durch eine dem Bedienelement zugeordnete Anzeigeeinheit angezeigt wird.

7. Verfahren nach einem der Ansprüche 1 bis 6, **dadurch gekennzeichnet, dass** ein als situationsgerecht erachtetes Fahrmanöver dem Fahrer durch das Kraftfahrzeug vorgeschlagen wird.

8. Verfahren nach einem der Anspruch 7, **dadurch gekennzeichnet,**
**dass** die Durchführung des vorgeschlagenen Fahrmanövers durch ein Bestätigungskommando des Fahrers ausgelöst wird.

9. Verfahren nach einem der Ansprüche 1 bis 8, **dadurch gekennzeichnet,**
**dass** für die Einigung zwischen Kraftfahrzeug und Fahrer unterschiedliche Interaktionsformen durch den Fahrer wählbar sind.

10. Verfahren nach einem der Ansprüche 1 bis 9, **dadurch gekennzeichnet,**
**dass** der Automatisierungsgrad des auszuführenden Fahrmanövers vom Fahrer wählbar ist.

## Claims

1. A method for unburdening the driver when operating a motor vehicle with a larger number of driver assistance systems for carrying out a large number of different driving manoeuvres as well as means for obtaining situation data for describing the current driving situation, **characterised by** the steps of:
- obtaining situation data by means of the motor vehicle
- determining a limited quantity of driving manoeuvres appropriate to the situation by means of the motor vehicle with the aid of the situation data
- agreement between the motor vehicle and driver regarding the implementation of a single driving manoeuvre appropriate to the situation.

2. A method according to claim 1, **characterised in that** a variable selection of operating possibilities for activating driving manoeuvres is offered to the driver, the selection of operating possibilities being designed such that a driving manoeuvre can only be selected by the driver if it is contained in the quantity of driving manoeuvres appropriate to the situation.

3. A method according to claim 1, **characterised in that** an operating command of the driver to select a driving manoeuvre is detected and **in that** the driving manoeuvre selected by the driver by means of the operating command is only initiated by the motor vehicle if it is contained in the quantity of driving manoeuvres appropriate to the situation.

4. A method according to any one of claims 1 to 3, **characterised in that** an operating command of the driver to select a driving manoeuvre is detected and **in that** the driver is warned when a command which is not appropriate to the situation is selected.

5. A method according to any one of claims 3 to 4, **characterised in that** the driver is offered a variable selection of operating possibilities for activating driving manoeuvres.

6. A method according to any one of claims 1 to 5, **characterised in that** the assignment state of an operating element is displayed to the driver by a display unit associated with the operating element.

7. A method according to any one of claims 1 to 6, **characterised in that** a driving manoeuvre considered appropriate to the situation is proposed to the driver by the motor vehicle.

8. A method according to claim 7, **characterised in that** the implementation of the proposed driving manoeuvre is activated by a confirmation command of the driver.

9. A method according to any one of claims 1 to 8, **characterised in that** different interaction forms can be selected by the driver for the agreement between the motor vehicle and driver.

10. A method according to any one of claims 1 to 9, **characterised in that** the degree of automation of the driving manoeuvre to be carried out can be selected by the driver.

## Revendications

1. Procédé d'assistance au conducteur pour la commande d'un véhicule équipé d'un grand nombre de systèmes d'assistance de conduite pour exécuter un grand nombre de manoeuvres de conduite différentes ainsi que des moyens pour recueillir des données de situation décrivant la situation de conduite actuelle,
**caractérisé par**
les étapes suivantes :
- collecte de données de situation par le véhicule,
- à l'aide des données de situation on détermine un ensemble limité de manoeuvres de conduite correspondant à la situation du véhicule automobile,
- accord entre le véhicule et le conducteur pour l'exécution d'une unique manoeuvre de conduite correspondant à la situation.

2. Procédé selon la revendication 1,
**caractérisé en ce qu'**
une sélection variable de possibilités de commande est offerte au conducteur pour déclencher des manoeuvres de conduite,
la sélection des possibilités de manoeuvre est conçue pour qu'une manoeuvre de conduite ne puisse être choisie par le conducteur que si elle fait partie de l'ensemble des manoeuvres de conduite correspondant à la situation.

3. Procédé selon la revendication 1,
**caractérisé en ce qu'**
on détecte un ordre de commande du conducteur pour la sélection d'une manoeuvre de conduite et
la manoeuvre de conduite sélectionnée par l'ordre de commande du conducteur ne sera transmise par le véhicule que si cette manoeuvre fait partie de l'ensemble des manoeuvres de conduite correspondant à la situation.

4. Procédé selon l'une des revendications 1 à 3,
**caractérisé en ce qu'**
on détecte un ordre de commande du conducteur pour la sélection d'une manoeuvre de conduite et le conducteur est averti s'il sélectionne un ordre qui ne correspond pas à la situation.

5. Procédé selon l'une des revendications 3 à 4,
**caractérisé en ce qu'**
une sélection variable de possibilités de commande est fournie au conducteur pour sélectionner des manoeuvres de conduite.

6. Procédé selon l'une des revendications 1 à 5,
**caractérisé en ce que**
l'état d'occupation d'un élément de commande est indiqué au conducteur par une unité d'affichage associée à l'élément de commande.

7. Procédé selon l'une des revendications 1 à 6,
**caractérisé en ce qu'**
une manoeuvre de conduite considérée comme correspondant à la situation est proposée au conducteur par le véhicule.

8. Procédé selon la revendication 7,
**caractérisé en ce que**
l'exécution de la manoeuvre de conduite proposée est déclenchée par un ordre de commande du conducteur.

9. Procédé selon l'une des revendications 1 à 8,
**caractérisé en ce que**
différentes formes d'interactions peuvent être choisies par le conducteur pour s'accorder entre le conducteur et le véhicule.

10. Procédé selon l'une des revendications 1 à 9,
**caractérisé en ce que**
le degré d'automatisation de la manoeuvre de conduite à exécuter est sélectionné par le conducteur.
